# EUROPÄISCHE PATENTSCHRIFT

(11) **EP 1 431 116 B1**
(45) Veröffentlichungstag und Bekanntmachung des Hinweises auf die Patenterteilung: **03.05.2006**
(21) Anmeldenummer: 03025391.8
(22) Anmeldetag: 05.11.2003
(51) Int. Cl.: B60Q 1/04

(54) **Fahrzeug mit einer nachgiebigen Stossfängeranordnung und einer Beleuchtungseinrichtung**
Vehicle with deformable bumper and lighting device
Véhicule avec pare-chocs déformable et dispositif d'éclairage

(30) Priorität: 16.12.2002 DE 10258629
(43) Veröffentlichungstag der Anmeldung: 23.06.2004
(73) Patentinhaber: DaimlerChrysler AG, 70567 Stuttgart (DE)
(72) Erfinder: Jocher, Reiner, 71134 Aidlingen (DE)

(56) Entgegenhaltungen:
- EP-A1- 1 213 208
- WO-A-02/22396
- DE-A1- 3 802 104
- DE-A1- 19 926 346
- DE-C1- 19 840 636
- US-A- 4 644 447

## Beschreibung

Die Erfindung betrifft ein Fahrzeug mit einer in zumindest einem Endabschnitt unter einer Stoßeinwirkung in Fahrzeuglängsrichtung nachgiebigen Stoßfängeranordnung und einer Beleuchtungseinrichtung gemäß dem Oberbegriff des Anspruchs 1, siehe EP-A-1 213 208.

Herkömmliche Kraftfahrzeuge weisen in ihren Endabschnitten Stoßfängeranordnungen oder zumindest jeweils eine Stoßstange außerhalb der Karosserie auf. Will man sicherstellen, dass bei kleineren Stößen, beispielsweise dem Anfahren eines Fußgängers mit mäßiger Geschwindigkeit, schwere Verletzung des Fußgängers durch den Aufprall ausgeschlossen werden, muss dafür gesorgt werden, dass die Stoßfängeranordnungen nachgiebig ausgebildet sind.

Ein weiterer besonderer Gefahrenpunkt neben der Stoßfängeranordnung sind die im Bereich der äußeren Ecken des Kraftfahrzeugs angeordneten Scheinwerfer. Bei einer Kollision zwischen einem Fußgänger und einem Kraftfahrzeug im Bereich der Scheinwerfer besteht die Gefahr, dass der Fußgänger durch die relativ harte Streuscheibe und/oder bei einem Zerspringen derselben durch Splitter verletzt wird.

Es ist zwar bekannt, nachgiebige Verformungsteile im Kraftfahrzeugendbereich anzuordnen, um bei einer Kollision des Kraftfahrzeugs mit Personen das Verletzungsrisiko der Personen zu vermindern, jedoch sind solche Verformungsteile im Bereich der Scheinwerfer bisher nicht eingesetzt worden.

Aus der DE 100 34 526 A1 ist ein Scheinwerfergehäuse für ein Fahrzeug, insbesondere für ein Kraftfahrzeug, mit einer von einer Lichtscheibe abdeckbaren Lichtaustrittsöffnung und einem sich von der Lichtaustrittsöffnung weg erstreckenden Seitenabschnitt bekannt, in welchem zumindest eine Sollbruchstelle vorgesehen ist. Bei einer Kollision der in der Lichtaustrittsöffnung des Scheinwerfergehäuses vorgesehenen Streuscheibe mit einer Person zerbricht die Sollbruchstelle im Seitenabschnitt, so dass der äußere Teil des Scheinwerfergehäuses nach innen ausweicht. Hierdurch können die für den Fußgängerschutz erforderlichen Beschleunigungswerte im Bereich der Scheinwerfer eingehalten werden.

Die Sollbruchstelle ist dabei derart ausgebildet, dass sie bei einer Krafteinwirkung bricht, die betragsmäßig kleiner ist als die Kraft, die bei einer Kollision mit einer Person insbesondere im Bereich des Oberschenkels Verletzungen hervorruft. Ferner bricht diese Sollbruchstelle bei einer Kraft, die kleiner ist als die Kraft, die zu einem Zerbrechen der äußeren Lichtscheibe führt, so dass ein Zersplittern der Lichtscheibe und daraus resultierende Schnittverletzungen bei einer Kollision verhindert werden. Nach einer Kollision und einem Bruch der Sollbruchstelle muss zudem lediglich der Seitenabschnitt ausgetauscht werden. Dies führt einerseits zu einer Verringerung des Verletzungsrisikos der kollidierenden Personen und vermindert andererseits die Kosten für den Fahrzeughalter nach der Kollision.

Aus der DE 37 28 752 C1 ist ein Frontscheinwerfer für Kraftfahrzeuge bekannt, welcher eine Streuscheibe aufweist, die zur Abdeckung einer Lichtaustrittsöffnung eines Reflektorgehäuses dient, die an diesem durch einen Befestigungsrahmen gehalten wird und die sich in Richtung der Reflektorgehäusetiefe nur am Reflektorgehäuse abstützt, das zumindest in einem Abstützbereich bei einem Aufprall nachgibt und den Weg für ein nachgebendes Eintauchen der Streuscheibe in einen Reflektorgehäusehohlraum freigibt, ohne dass der Befestigungsrahmen nachteilig verformt wird.

Die Streuscheibe ist über einen umlaufenden Lagerfuß in Fahrzeuglängsrichtung nach vorne an der Rückseite des Befestigungsrahmens und entlang ihres Außenumfangs ebenfalls an diesem angeklebt. In Richtung der Reflektorgehäusetiefe stützt sie sich mit dem Lagerfuß nur am Reflektorgehäuse ab, das aber zumindest in einem oberen, in Richtung der Fahrzeugquerachse verlaufenden Abstützbereich bei einem Aufprall bzw. einer größeren Krafteinwirkungen nachgibt, so dass die Streuscheibe in den Reflektorgehäusehohlraum gedrückt werden kann und damit keinen verletzungsfördernden Widerstand bietet.

Aus der DE 38 02 104 A1 ist eine Anordnung einer Beleuchtungseinheit für ein Kraftfahrzeug bekannt, welche ein an der Karosserie des Fahrzeugs nachgiebig abgestütztes Gehäuse zur Aufnahme wenigstens einer Lampe aufweist. Bei einer von außen einwirkenden Stoßbelastung kann das Gehäuse mit jedem Randbereich in einen karosserieseitigen Freiraum ausweichen. Anschließend wird das Gehäuse von einer Rückstellkraft in die Normallage zurück verlagert.

Die Beleuchtungseinheit kann bei einem Unfall auch größere Aufprallgeschwindigkeiten schadlos überstehen, wobei die Stoßbelastung aus allen möglichen Richtungen auf die Beleuchtungseinheit einwirken kann. Die Anordnung kann zudem so ausgebildet werden, dass sie einen Großteil der Stoßenergie während der Verlagerung der Beleuchtungseinheit in den Freiraum absorbiert. In diesem Fall wird bei einem Unfall beispielsweise von einer Person auf die Beleuchtungseinheit ausgeübte Stoßbelastung herabgesetzt, wodurch sich die Verletzungsgefahr vermindert.

Aus der DE 100 30 373 A1 ist eine Befestigungsvorrichtung für einen Kraftfahrzeugscheinwerfer bekannt. Die Befestigungsvorrichtung mit einem Gehäuse und einer Lichtscheibe ist in einem durch ein oder mehrere Kraftfahrzeugteile gebildeten Hohlraum integriert, wobei ein Rahmen vorgesehen ist und der Kraftfahrzeugscheinwerfer in dem Rahmen für eine Stoßbelastung auf die Lichtscheibe nachgiebig gehalten ist. Die Nachgiebigkeit kann beispielsweise mit Federn, einem elastischen Federbalg oder mittels Gelenken erreicht werden. Der Rahmen und der Kraftfahrzeugscheinwerfer können eine bauliche Einheit bilden und als vorgefertigtes Bauteil an das Fahrzeug montiert werden. Der Rahmen ist im montierten Zustand lagefixiert an dem Fahrzeug befestigt, während der Kraftfahrzeugscheinwerfer in Stoßrichtung auf die Lichtscheibe als im wesentlichen horizontal von vorne schwimmenden Rahmen gehalten ist.

Der Kraftfahrzeugscheinwerfer gibt so geringen Stoßeinwirkungen nach und nimmt anschließend seine definierte Ausgangslage wieder ein. Durch eine gezielte Wahl der Federsteifigkeit der nachgiebigen Befestigungsmittel kann verhindert werden, dass der Scheinwerfer aufgrund von zu hohem Winddruck bei hoher Fahrgeschwindigkeit ungewollt seine Solllage verlässt, und nur bei einer vorbestimmten Mindestkraft nachgibt.

Es ist Aufgabe der vorliegenden Erfindung einen Endabschnitt eines Kraftfahrzeugs so auszugestalten, dass das Verletzungsrisiko einer Person, die mit dem Kraftfahrzeug kollidiert, vermindert wird.

Erfindungsgemäß wird diese Aufgabe durch den Gegenstand des Anspruchs 1 gelöst, wobei sich vorteilhafte Ausgestaltungen aus den Unteransprüchen ergeben.

Die vorliegende Erfindung ist dadurch gekennzeichnet, dass am Seitenabschnitt der Beleuchtungseinrichtung zumindest ein Führungselement angeordnet ist, an dem die Beleuchtungseinrichtung samt Stoßfängeraußenhaut bei einer Stoßeinwirkung in Fahrzeuglängsrichtung geführt verstellbar ist.

Die Erfindung beruht bei einer ersten Variante auf dem allgemeinen Gedanken, eine Streuscheibe einer Beleuchtungseinrichtung in eine in zumindest einem Endabschnitt unter einer Stoßeinwirkung in Fahrzeuglängsrichtung nachgiebige Stoßfängeranordnung zu integrieren. Bisherige Konzepte sahen vor, die Beleuchtungseinrichtung getrennt von einer Stoßfängeraußenhaut auszubilden. Zudem weisen herkömmliche Beleuchtungseinrichtungen eine Streuscheibe aus Glas auf. Die Ausbildung der Streuscheibe und der Stoßfängeraußenhaut als einteiliges Bauteil bietet im Vergleich zur herkömmlichen Konstruktion wesentliche Vorteile. Da die Streuscheibe bei einteiliger Ausbildung ebenfalls aus Kunststoff besteht, werden Verletzungen von mit dem Fahrzeug kollidieren Personen durch Glassplitter vermieden. Eine Streuscheibe aus Kunststoff, z.B. aus Polycarbonat, ist darüber hinaus wesentlich weicher als Glas, wodurch die Härte des Aufpralls gedämpft wird. Des Weiteren gibt die Streuscheibe bei entsprechender Halterung bzw. Lagerung zusammen mit dem Stoßfänger nach, wenn entsprechende Kräfte wirksam sind.

Neben den erwähnten sicherheitstechnischen Vorzügen, bietet die Erfindung zusätzliche Vorteile hinsichtlich des Produktionsprozesses und damit der Kosten. Zum Beispiel ist es möglich, die einteilig ausgebildete Streuscheibe samt Stoßfängeraußenhaut in einem Arbeitsgang an das Fahrzeug zu montieren, wodurch der Arbeitsaufwand verringert und die Lagerung der Bauteile vereinfacht wird, da nicht wie bisher drei einzelne Bauteile (zwei Streuscheiben und eine Stoßfängeraußenhaut) gelagert werden müssen, sondern nur noch ein einzelnes Bauteil, welches die zwei Streuscheiben sowie die Stoßfängeraußenhaut umfasst.

Des weiteren hat die einteilige Ausbildung den Vorteil, dass keine Fugen zwischen der Streuscheibe und der Stoßfängeraußenhaut entstehen und so die Form bzw. das Design betont wird.

Bei heutigen modernen Fahrzeugen wird die Außenform hauptsächlich im Windkanal optimiert. An Front und Heck des Fahrzeugs müssen die lichttechnischen Bauteile derart platziert werden, dass sie die neuesten gesetzlichen Vorschriften für den Fußgängerschutz (Stufe II) erfüllen und zudem bei einem eventuellen leichten Aufprall nicht beschädigt werden. Die erfindungsgemäße Lösung sieht vor, dass sich bei einem vorbestimmten Aufprall (z. B. Pendelschlagversuch) die Stoßstange um einen ersten Teilweg und die Streuscheibe zusätzlich um einen zweiten Teilweg in Aufprallrichtung bewegen können und somit einen relativ großen gewünschten Gesamtweg erreichen.

Eine vorteilhafte Ausgestaltung der Erfindung ist dadurch gekennzeichnet, dass das zumindest ein Führungselement eine Sollbruchstelle aufweist. Die Sollbruchstelle bricht bei einer Krafteinwirkung, die betragsmäßig kleiner ist als die Kraft die bei einer Kollision mit einer Person Verletzungen erzeugt. Die Sollbruchstelle ist dabei so ausgelegt, dass die Funktionsfähigkeit der Beleuchtungseinrichtung während des normalen Betriebs des Kraftfahrzeugs nicht beeinträchtigt wird, d.h. die normal beim Betrieb des Kraftfahrzeugs auftretenden Kräfte, wie z.B. Windkräfte, reichen nicht aus, um einen Bruch der Sollbruchstelle herbeizuführen.

Ferner ist das Führungselement teleskopartig ausgebildet, wodurch sich die Beleuchtungseinrichtung bei einer Kollision teleskopähnlich zusammenschiebt und dadurch Beschädigungen bei den umgebenden Teilen des Kraftfahrzeugs, insbesondere bei Halterungselementen, vermieden werden.

Zweckmäßig kann vorgesehen sein, dass das Führungselement als Stoßdämpfer und/oder als Federelement ausgebildet ist. Eine Ausbildung des Führungselementes mit Stoßdämpfereigenschaft verringert zusätzlich das Verletzungsrisiko von Personen bei einem Aufprall, wohingegen die Ausgestaltung des Führungselementes mit Federeigenschaft den Vorteil bietet, bei einem Aufprall in elastischer Weise nachzugeben und nach dem Aufprall selbstständig in die normale Ausgangslage zurück zu verfahren.

Entsprechend einer alternativen Ausführungsform kann vorgesehen sein, dass die Streuscheibe und die Stoßfängeraußenhaut über eine Klebe- und/oder Schweißverbindung miteinander verbunden sind. Alternativ können die Streuscheibe und die Stoßfängeraußenhaut aneinander angespritzt sein. Dies bietet den Vorteil unterschiedliche Kunststoffarten miteinander zu kombinieren und den jeweils optimalen Kunststoff für die jeweilige geforderte Funktion (Transparenz für die Streuscheibe/Deformierbarkeit für die Stoßfängeraußenhaut) zur Anwendung zu bringen.

Weitere wichtige Merkmale und Vorteile der Erfindung ergeben sich aus den Unteransprüchen, aus den Zeichnungen und aus den zugehörigen Figurenbeschreibungen anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Die Figuren zeigen schematisch:
- Fig. 1: einen Längsschnitt durch einen Frontendabschnitt eines Kraftfahrzeugs, in dessen Stoßfängeraußenhaut eine Streuscheibe integriert ist,
- Fig. 2: einen Längsschnitt wie in Fig. 1, jedoch bei voneinander getrennter Streuscheibe und Stoßfängeraußenhaut.

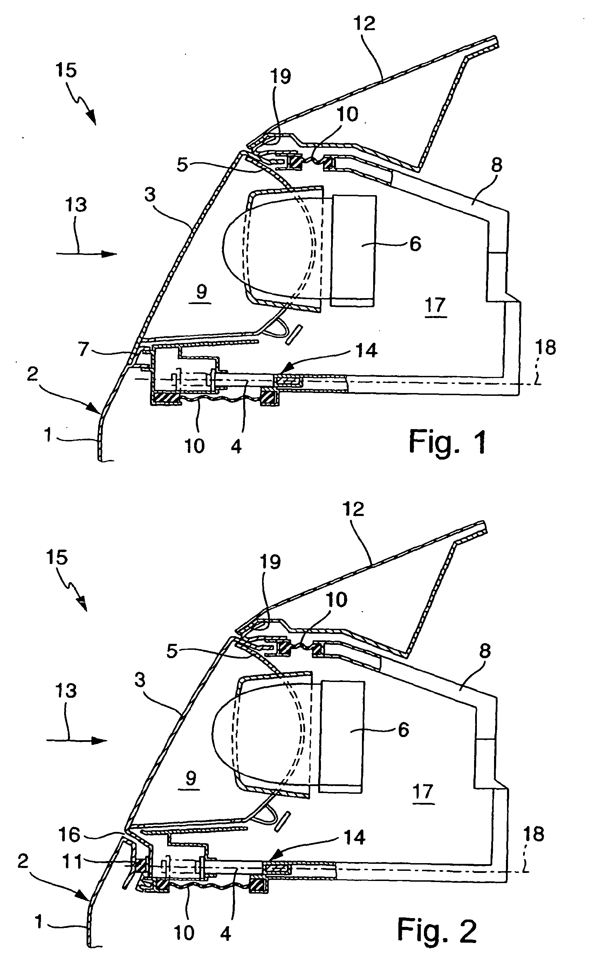

Entsprechend Fig. 1 zeigt ein Frontendabschnitt 15 eines im übrigen nicht dargestellten Kraftfahrzeugs eine Stoßfängeraußenhaut 1, welche einen Bestandteil einer Stoßfängeranordnung 2 bildet, sowie eine Beleuchtungseinrichtung 17. Die Beleuchtungseinrichtung 17 besteht im wesentlichen aus einem hinteren Gehäuseteil 8 und einem vorderen Gehäuseteil 9, das frontendseitig durch eine Streuscheibe 3 abgeschlossen ist. Das vordere Gehäuseteil 9 und das hintere Gehäuseteil 8 sind in seitlichen Randbereichen 14, wovon beispielhaft einer in Fig. 1 dargestellt ist, horizontal verschieblich miteinander verbunden. Das hintere Gehäuseteil 8 ist dabei an einer in Fig. 1 nicht dargestellten Karosserie fest angeordnet.

An den Übergängen zwischen den beiden Gehäuseteilen 8, 9 sind elastische Dichtungen 10 angeordnet, welche eine Relativverschiebung des vorderen Gehäuseteils 9 zum hinteren Gehäuseteil 8 in einer im wesentlichen horizontalen Aufprallrichtung 13 zulassen und gleichzeitig einen Innenraum der Beleuchtungseinrichtung 17 gegen die außen liegende Umgebung abdichten, so dass dieser vor Feuchtigkeit und/oder Schmutz geschützt ist. In die Beleuchtungseinrichtung 17 ist eine Leuchteinheit 6 integriert, welche über einen Reflektor 5 Licht durch die Streuscheibe 3 entgegen der Aufprallrichtung 13 nach außen abstrahlt.

Wie in Fig. 1 dargestellt, wird eine äußere Kontur des Frontendabschnitts 15 durch eine Außenlinie, welche durch die Stoßfängeraußenhaut 1, die Streuscheibe 3 und eine Motorhaube 12 bestimmt wird, gezeichnet. Die Motorhaube 12 schließt dabei an einen oberen Bereich der Streuscheibe 3 an, wohingegen die Stoßfängeraußenhaut 1 über eine Verbindung 7 mit einem unteren Bereich der Streuscheibe 3 verbunden ist. Zwischen der Streuscheibe 3 bzw. dem vorderen Gehäuseteil 9 und der Motorhaube 12 ist zweckmäßig eine in Fig. 1 weitere Dichtung 19 vorgesehen.

Bei der erfindungsgemäßen Variante gemäß Fig. 1 sind die Stoßfängeraußenhaut 1 und die Streuscheibe 3 einteilig ausgebildet, d.h. sie weisen im Bereich der Verbindung 7 einen fugenlosen Übergang auf (vgl. Pos. 16 in Fig. 2). Die Verbindung 7 ist gemäß Fig. 1 als Verzahnung zwischen der Streuscheibe 3 und der Stoßfängeraußenhaut 1 ausgebildet. Prinzipiell ist aber auch eine verklebte oder verschweißte oder eine aneinander gespritzte Verbindung 7 denkbar.

An dem Seitenabschnitt 14, bzw. im Bereich zwischen dem vorderen Gehäuseteil 9 und dem hinteren Gehäuseteil 8 ist gemäß Fig. 1 ein teleskopierbares Führungselement 4 angeordnet. Das Führungselement 4 ermöglicht eine Relativverschiebung des vorderen Gehäuseteils 9 samt Stoßfängeraußenhaut 1 in Aufprallrichtung 13 auf das hintere Gehäuseteil 8 zu. Das Führungselement 4 kann dabei als Stoßdämpfer und/oder als Federelement ausgebildet sein. Bei der Ausbildung als Federelement schiebt dieses das vordere Gehäuseteil 9 mitsamt der damit fest verbundenen Stoßfängeraußenhaut 1, nach einer Stoßeinwirkung mit Auslenkung in Aufprallrichtung 13, selbsttätig in eine normale Ausgangslage zurück. An dem jeweiligen Führungselement 4 kann zusätzlich eine nicht dargestellte Sollbruchstelle angeordnet sein, welche bewirkt, dass erst bei Überschreiten einer bestimmten Stoßkraft dem Führungselement 4 eine führende Wirkung zukommt.

Das in Fig. 1 beschriebene System soll hauptsächlich dazu dienen, im Crashfall mit einem Fußgänger die Verletzungsfolgen zu mindern und gleichzeitig die Beschädigungen am Fahrzeug zu reduzieren. Bei einem Aufprall eines Fußgängers in Aufprallrichtung 13 auf den Frontendbereich 15 wird zunächst die Stoßfängeraußenhaut 1 deformiert. Bei Überschreiten einer vorbestimmten Kraft bewegt sich die Stoßfängeraußenhaut 1 samt daran angeschlossener Streuscheibe 3 in Aufprallrichtung 13 auf das hintere Gehäuseteil 8 zu und schafft damit zusätzlichen Deformationsweg.

Die Streuscheibe 3 ist gemäß Fig. 1 aus transparentem Kunststoff (Polycarbonat) ausgebildet und besitzt deshalb ebenso wie die Stoßfängeraußenhaut 1 eine aufpralldämpfende Wirkung. Im Gegensatz zu einer in Glas ausgeführten Streuscheibe 3 wird dadurch bei höheren Aufprallgeschwindigkeiten ein Zersplittern derselben, wie es bei einer Glasausführung der Fall wäre, vermieden, wodurch das Verletzungsrisiko für den Fußgänger reduziert werden kann.

Im Gegensatz zu Fig. 1 ist bei der Variante gemäß Fig. 2 eine durch eine Fuge 16 von der Stoßfängeraußenhaut 1 getrennte Streuscheibe 3 dargestellt. Das Funktionsprinzip bei einem Aufprall in Aufprallrichtung 13 ist jedoch prinzipiell dem zu Fig. 1 beschriebenen gleich.

Die Fuge 16 zwischen der Stoßfängeraußenhaut 1 und der Streuscheibe 3 kann je nach gewünschtem äußeren Erscheinungsbild unterschiedlich breit ausgebildet sein, wodurch es möglich ist, auf das äußere Erscheinungsbild bzw. das Design des Fahrzeugs Einfluss zu nehmen. Zwischen der Streuscheibe 3 und der Stoßfängeranordnung 2 ist ein Abstützungselement 11 angeordnet, welches im Crashfall die in der Aufprallrichtung 13 einwirkende Kraft von der Stoßfängeranordnung 2 auf die Streuscheibe 3 und damit auf das vordere Gehäuseteil 9 überträgt. Günstiger Weise ist das Abstützungselement 11 in Verlängerung einer Längsachse 18 des Führungselements 4 angeordnet, so dass es ist im Crashfall zentral auf dieses einwirkt.

Zusammenfassend lassen sich die wesentlichen Merkmale der erfindungsgemäßen Lösung wie folgt charakterisieren:

Die Beleuchtungseinrichtung 17 besteht im wesentlichen aus dem hinteren Gehäuseteil 8, welches fest mit der nicht dargestellten Karosserie verbunden ist und dem vorderen Gehäuseteil 9, in welches die Streuscheibe 3 integriert ist, die ihrerseits gemäß Fig. 1 fest über die Verbindung 7 mit der Stoßfängeraußenhaut 1 verbunden ist.

Die Streuscheibe 3 ist aus transparentem Kunststoff (Polycarbonat) ausgebildet und neigt im Crashfall nicht zu einer verletzungsfördernden Splitterbildung.

Bei einer Kollision des Kraftfahrzeugs mit einem Fußgänger und einem Aufprall desselben in Aufprallrichtung 13 auf den Frontendabschnitt 15 des Kraftfahrzeugs wird zunächst die Stoßfängeraußenhaut 1 deformiert und bei Überschreiten einer bestimmten Krafteinwirkung das vordere Gehäuseteil 9 samt Stoßfängeraußenhaut 1 entlang des zumindest einen Führungselements 4 auf das hintere Gehäuseteil 8 zu bewegt.

Das teleskopierbares Führungselement 4 kann je nach Ausführungsform als Stoßdämpfer und/oder als Federelement ausgebildet sein. Gleichzeitig kann vorgesehen sein, das Führungselement 4 mit einer Sollbruchstelle auszubilden, welche bewirkt, dass bei geringeren Aufprallgeschwindigkeiten, d.h. geringerer Krafteinwirkung unter einem vorbestimmten Wert, keine Verschiebung des vorderen Gehäuseteils 9 erfolgt.

Alternativ ist auch eine voneinander getrennte Ausbildung der Streuscheibe 3 und der Stoßfängeraußenhaut 1 mit dazwischen liegender Fuge 16 denkbar. Bei dieser Ausführungsform ist zusätzlich an die Stoßfängeranordnung 2 das Abstützungselement 11 angeordnet, welches die auf die Stoßfängeraußenhaut 1 einwirken Kraft auf die Streuscheibe 3 bzw. das vordere Gehäuseteil 9 überträgt und somit eine Relativverschiebung desselben bewirkt.

## Patentansprüche

1. Fahrzeug, insbesondere Kraftfahrzeug,
- mit einer in zumindest einem Endabschnitt (15) unter einer Stoßeinwirkung in Fahrzeuglängsrichtung nachgiebigen Stoßfängeranordnung (2) und einer Beleuchtungseinrichtung (17),
- wobei die Stoßfängeranordnung (2) eine Stoßfängeraußenhaut (1) aufweist, und
- wobei die Beleuchtungseinrichtung (17) eine frontseitige Streuscheibe (3) und zumindest einen sich von der Streuscheibe (3) entgegen der Fahrtrichtung weg erstreckenden Seitenabschnitt (14) aufweist,
**dadurch gekennzeichnet,**
**dass** am Seitenabschnitt (14) der Beleuchtungseinrichtung (17) zumindest ein teleskopierbares Führungselement (4) angeordnet ist, welches eine geführte Relativbewegung eines vorderen Gehäuseteils (9), in welches die Streuscheibe (3) integriert ist, mitsamt der Stoßfängeraußenhaut (1) in Aufprallrichtung auf ein hinteres Gehäuseteil (8) der Beleuchtungseinrichtung (17) zu ermöglicht.

2. Fahrzeug nach Anspruch 1,
**dadurch gekennzeichnet,**
**dass** die Streuscheibe (3) und die Stoßfängeraußenhaut (1) als einteiliges Bauteil ausgebildet sind.

3. Fahrzeug nach Anspruch 2,
**dadurch gekennzeichnet,**
**dass** das zumindest ein Führungselement (4) eine Sollbruchstelle aufweist.

4. Fahrzeug nach einem der Ansprüche 1 bis 3,
**dadurch gekennzeichnet,**
**dass** das Führungselement (4) als Stoßdämpfer ausgebildet ist.

5. Fahrzeug nach einem der Ansprüche 1 bis 4,
**dadurch gekennzeichnet,**
**dass** das Führungselement (4) als Federelement ausgebildet ist.

6. Fahrzeug nach einem der Ansprüche 1 bis 5,
**dadurch gekennzeichnet,**
**dass** die Streuscheibe (3) aus transparentem Polycarbonat ausgebildet ist.

7. Fahrzeug nach einem der Ansprüche 1 bis 6,
**dadurch gekennzeichnet,**
- **dass** die Streuscheibe (3) und die Stoßfängeraußenhaut (1) über eine Klebe- und/oder Schweißverbindung (7) miteinander verbunden sind, oder
- **dass** die Streuscheibe (3) und die Stoßfängeraußenhaut (1) aneinander angespritzt sind.

8. Fahrzeug nach einem der Ansprüche 1 bis 7,
**dadurch gekennzeichnet,**
**dass** die Stoßfängeraußenhaut (1) sich über zumindest ein stoßübertragendes Abstützungselement (11) an der Streuscheibe (3) abstützt.

9. Fahrzeug nach einem der Ansprüche 1 bis 8,
**dadurch gekennzeichnet,**
**dass** das vordere Gehäuseteil (9) und das hintere Gehäuseteil (8) über eine elastische Dichtung (10) miteinander verbunden sind.

## Claims

1. A vehicle, in particular a motor vehicle,
- having a bumper arrangement (2) in at least one end section (15) which is deformable under the effect of an impact along the length of the vehicle, and a lighting device (17),
- the bumper arrangement (2) having an external bumper skin (1), and
- the lighting device (17) having a front lens (3) and at least one lateral section (14) which extends away from the lens (3) against the direction of travel,
**characterised in that**
positioned on the lateral section (14) of the lighting device (17) is at least one telescopic guide element (4) which permits a guided relative movement of a front housing part (9), in which the lens (3) is integrated, together with the external bumper skin (1) in the direction of impact towards a rear housing part (8) of the lighting device (17).

2. A vehicle in accordance with claim 1,
**characterised in that**
the lens (3) and the external bumper skin (1) are designed as one single component.

3. A vehicle in accordance with claim 2,
**characterised in that**
at least one guide element (4) has a pre-determined breaking point.

4. A vehicle in accordance with one of claims 1 to 3,
**characterised in that**
the guide element (4) is designed as a shock absorber.

5. A vehicle in accordance with one of claims 1 to 4,
**characterised in that**
the guide element (4) is designed as a spring element.

6. A vehicle in accordance with one of claims 1 to 5,
**characterised in that**
the lens (3) is made of a transparent polycarbonate.

7. A vehicle in accordance with one of claims 1 to 6,
**characterised in that**
- the lens (3) and the external bumper skin (1) are connected together by an adhesive and/or welded connection (7), or
- the lens (3) and the external bumper skin (1) are jointed together using an injection technique.

8. A vehicle in accordance with one of claims 1 to 7,
**characterised in that**
the external bumper skin (1) is supported on at least one impact-transmitting support element (11) on the lens (3).

9. A vehicle in accordance with one of claims 1 to 8,
**characterised in that**
the front housing part (9) and the rear housing part (8) are joined together by an elastic seal (10).

## Revendications

1. Véhicule, en particulier véhicule automobile,
- avec, dans une section d'extrémité (15) au moins, un dispositif pare-choc (2) déformable dans le sens longitudinal du véhicule sous l'effet d'un choc et un dispositif d'éclairage (17),
- le dispositif pare-choc (2) comportant une enveloppe extérieure de pare-choc (1),
- et le dispositif d'éclairage (17) comportant un écran diffusant frontal (3) et au moins une partie latérale (14) s'étendant à partir de l'écran diffusant (3) contrairement au sens de marche,
**caractérisé en ce qu'**un élément de guidage télescopique (4) au moins est disposé sur la partie latérale (14) du dispositif d'éclairage (17), lequel permet un déplacement guidé relatif dans le sens du choc d'une pièce avant de carter (9) où est intégré l'écran diffusant (3) avec l'enveloppe extérieure de pare-choc (1) vers une pièce arrière de carter (8) du dispositif d'éclairage (17).

2. Véhicule selon la revendication 1, **caractérisé en ce que** l'écran diffusant (3) et l'enveloppe extérieure de pare-choc (1) sont formés comme composant en une seule pièce.

3. Véhicule selon la revendication 2, **caractérisé en ce qu'**un élément de guidage (4) au moins présente une position de rupture obligée.

4. Véhicule selon l'une des revendications 1 à 3, **caractérisé en ce que** l'élément de guidage (4) est formé comme pare-choc.

5. Véhicule selon l'une des revendications 1 à 4, **caractérisé en ce que** l'élément de guidage (4) est formé comme élément à ressort.

6. Véhicule selon l'une des revendications 1 à 5, **caractérisé en ce que** l'écran diffusant (3) est en polycarbonate transparent.

7. Véhicule selon l'une des revendications 1 à 6, **caractérisé en ce que**
- l'écran diffusant (3) et l'enveloppe de pare-choc (1) sont raccordés par liaison adhésive et/ou soudée (7), ou bien
- l'écran diffusant (3) et l'enveloppe de pare-choc (1) sont directement injectés l'un sur l'autre.

8. Véhicule selon l'une des revendications 1 à 7, **caractérisé en ce que** l'enveloppe de pare-choc (1) prend appui sur au moins un élément d'appui (11) transmetteur de choc sur l'écran diffusant (3).

9. Véhicule selon l'une des revendications 1 à 8, **caractérisé en ce que** la pièce avant de carter (9) et la pièce arrière de carter (8) sont raccordées entre elles par un joint élastique (10).
